(19) **Europäisches Patentamt**
**European Patent Office**
**Office européen des brevets**

(11) **EP 1 964 669 B1**

(12) **EUROPEAN PATENT SPECIFICATION**

(45) Date of publication and mention
of the grant of the patent:
**26.09.2012   Bulletin 2012/39**

(51) Int Cl.:
*B32B 27/00* (2006.01)   *B32B 27/20* (2006.01)
*B32B 27/32* (2006.01)   *B32B 27/36* (2006.01)
*C08K 3/00* (2006.01)   *C08L 23/00* (2006.01)
*C08L 67/00* (2006.01)   *F21V 7/22* (2006.01)
*G02B 5/08* (2006.01)

(21) Application number: **06834721.0**

(22) Date of filing: **14.12.2006**

(86) International application number:
**PCT/JP2006/324967**

(87) International publication number:
**WO 2007/072737 (28.06.2007 Gazette 2007/26)**

(54) **REFLECTIVE FILM**

REFLEKTIERENDER FILM

FILM REFLECHISSANT

(84) Designated Contracting States:
**DE FR GB**

(30) Priority:  **22.12.2005   JP 2005369697**

(43) Date of publication of application:
**03.09.2008   Bulletin 2008/36**

(73) Proprietor: **MITSUBISHI PLASTICS, INC.**
**Chiyoda-ku,**
**Tokyo 100-0005 (JP)**

(72) Inventors:
• **NISHIDA, Miki**
**Nagahama-shi, Shiga 5268660 (JP)**
• **HIRUMA, Takashi**
**Nagahama-shi, Shiga 5268660 (JP)**
• **KATSUHARA, Kazunari**
**Nagahama-shi, Shiga 5268660 (JP)**
• **WATANABE, Takayuki**
**Nagahama-shi, Shiga 5268660 (JP)**
• **TAKAGI, Jun**
**Nagahama-shi, Shiga 5268660 (JP)**

(74) Representative: **Gille Hrabal**
**Patentanwälte**
**Brucknerstrasse 20**
**40593 Düsseldorf (DE)**

(56) References cited:
**EP-A1- 1 219 412      WO-A1-2004/104077**
**WO-A1-2005/045482    JP-A- 2003 139 926**
**JP-A- 2004 301 967     US-A1- 2004 178 139**
**US-B1- 6 251 505**

• **DATABASE WPI Week 200502 Thomson Scientific, London, GB; AN 2005-015937 XP002573518 & JP 2004 330727 A (TEIJIN DUPONT FILMS KK) 25 November 2004 (2004-11-25)**
• **DATABASE WPI Week 200540 Thomson Scientific, London, GB; AN 2005-388991 XP002573519 & JP 2005 125700 A (TEIJIN DUPONT FILMS KK) 19 May 2005 (2005-05-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 964 669 B1

## Description

[Technical Field]

The present invention relates to reflective film used in a reflective panel or the like, for liquid crystal display, lighting equipment, illuminated sign and the like.

[Background of The Invention]

In recent years, reflective panels are in use in many fields such as, to begin with, liquid crystal display, member for projection screen and planar light source, lighting equipment and illuminated sign. Among these, the field of liquid crystal display proceeds with larger apparatus and higher display capability, such that, in order to provide liquid crystals with as much light as possible and to improve the capability of backlight units, more reflection capability is sought of reflective panels, and in particular reflective films constituting the reflective panels.

For instance, a white sheet formed by the addition of titanium oxide to an aromatic polyester series resin is known as this type of reflective film (refer to Patent Reference 1); however, such high reflection capability as described above required in liquid crystal display is difficult to realize.

In addition, reflective films have been disclosed, comprising a constitution wherein a sheet formed by adding a filler to an aromatic polyester series resin has been drawn to form microscopic gaps in the sheet so as to generate light scattering reflections (refer to Patent Reference 2); however realization of high reflection capability required in liquid crystal displays is still difficult, and they bore the issue that aromatic rings contained in the molecular chains of the aromatic polyester series resins forming these films absorb ultraviolet light, therefore, the films deteriorate and yellow due to the ultraviolet light emitted from a light source such as a liquid crystal display, gradually decreasing the light reflectivity of the reflective films.

In addition, known as a thin reflective film is a reflective film in which a metallic thin film such as silver was vapor deposited onto a polyethylene terephthalate (hereinafter may be abbreviated as "PET") film containing a white pigment, for instance (for instance refer to Patent Reference 3); however, the issue of the film deteriorating and yellowing due to the ultraviolet light emitted from a light source such as a liquid crystal display, gradually decreasing the reflectance of the reflective film, is also borne in this reflective film.

In view of such issues, to improve the light resistance of films, films with metallic thin film such as silver vapor deposited onto a film with ultraviolet light absorbent kneaded into or a film provided with an ultraviolet light stable resin layer have been proposed (refer to Patent Reference 4). However, in addition to having the issues of low reflection capability and the brightness of liquid crystal screens being insufficient, sufficient evaluation regarding light resistance cannot be obtained from these.

In addition, as a reflective film provided with a layered structure, for instance, in Patent Reference 5, is disclosed a reflective film, which is a reflective film in which an A layer and a B layer comprising polyester resin and barium sulfate are alternately layered, the amount of particles contained in the A layer being 10% or less. However, the constitution disclosed herein, as is, bears the issues that the reflection capability is low and the brightness of the liquid crystal screen is insufficient.

Furthermore, white sheets formed by adding a microparticulate filler to a polyolefin series resin are also known (for instance, refer to Patent References 6 and 7). However, such white sheets require that at least 40% or more porosity (ratio of open pores) is secured in order to obtain light reflectivity, and if the porosity (ratio of open pores) is increased, mechanical strength becomes insufficient, with the possibility of breakage during membrane forming or during use. Further films and sheets are described in the Patent References 8 to 11.

[Patent Reference 1] JP 2002-138150 A
[Patent Reference 2] JP H4-239540 A
[Patent Reference 3] JP H10-193494 A
[Patent Reference 4] JP 2002-122717 A
[Patent Reference 5] JP 2004-330727 A
[Patent Reference 6] Japanese Patent No. 3617535B2
[Patent Reference 7] Japanese Patent No. 3755905B2
[Patent Reference 8] US 2004/178139 A1
[Patent Reference 9] US 6 251 505 B1
[Patent Reference 10] JP 20005 125 700 A
[Patent Reference 11] EP 1 219 412 A1

[Disclosure of the Invention]

[Issues to be addressed by the present invention]

An object of the present invention is to provide an excellent reflective film having excellent reflection capability and at the same time allowing an excellent brightness to be exerted when integrated in a liquid crystal display or the like.

[Means to address the issues]

The reflective film of the present invention is a reflective film provided with an A layer containing a resin composition A comprising a lactic acid series polymer or a polyolefin series resin and a microparticulate filler, the content ratio of the microparticulate filler in the resin composition A being 10 to 80 percent in mass, and at the same time provided with a B layer as the outermost layer on the reflective face side, containing a resin composition B comprising a lactic acid series polymer or a polyolefin series resin and a microparticulate filler, the content ratio of the microparticulate filler in the resin composition B being greater than 0.1 percent in mass but less than 5 percent in mass, the gloss at 60° being 50 to 90 on the side of the face used for reflection.

The reflective film of the present invention has excellent light reflection capability and at the same time can exhibit an excellent brightness when integrated into a liquid crystal display, furthermore, the decrease in reflectance due to ultraviolet light absorption being small, has also an excellent ability to prevent yellowing. Therefore, the reflective film of the present invention allows a reflective panel that is balanced with regard to properties such as light reflectivity to be provided by pasting or the like onto for instance a metal plate or a resin plate to form a reflective panel used in liquid crystal display, lighting equipment, illuminated sign or the like.

Note that "film" means in general a thin flat product with a thickness that is extremely small compared to the length and width, with a maximum thickness that is limited arbitrarily, normally provided in the form of a roll (Japanese Industrial Standards JIS K6900). Meanwhile, "sheet" means in general a flat product that is thin, and generally with a thickness that is small despite the length and width thereof, as defined in JIS. However, as the boundary between sheet and film is not clear, and as there is no need in the present invention to distinguish the two in wording, in the present invention, even a case called "film" comprises "sheet", and even a case called "sheet" comprises "film".

In addition, in the present invention, unless expressly stated otherwise, a case phrased as "main constituent" comprises the meaning that inclusion of another constituent is allowed in a range that does not impair the function of the main constituent. In this case, without specifying in particular the content ratio of the main constituent, the main constituent (if two constituents or more are the main constituent, the total amount thereof) normally occupies 50 percent in mass or greater in the composition, preferably 70 percent in mass or greater, and particularly preferably 90 percent in mass or greater (100% contain).

In addition, in the present specification, unless expressly stated otherwise, a case where "X to Y" (X and Y are any numbers) is noted comprises the meaning of "X or greater but Y or less" and at the same time the meaning of "preferably greater than X but less than Y".

[Best Mode for Carrying out the Invention]

Hereinafter, one example of embodiment of the present invention will be described in detail.

The reflective film according to the present embodiment (hereinafter referred to as "the present reflective film") is a reflective film provided with an A layer comprising a resin composition A containing a a lactic acid series polymer or a polyolefin series resin and a microparticulate filler, the content ratio of the microparticulate filler in the resin composition A being 10 to 80 percent in mass, at the same time provided with a B layer comprising a resin composition B containing a lactic acid series polymer or a polyolefin series resin and a microparticulate filler, content ratio of the microparticulate filler in the resin composition B being greater than 0.1 percent in mass but less than 5 percent in mass.

In the present reflective film, it is important that the gloss is 50 to 90, and in particular 60 to 80 is desirable, as measured when illuminating light on the side of the face used for reflection and adjusting the incident angle and acceptance angle thereof to 60°.

Herein, "gloss" is a quantity indicating the extent of reflection when light strikes the surface of a reflective film and, with a prescribed glass surface defined in JIS Z 8741 serving as a reference surface and the gloss of this reference surface being defined as 100, is a value indicated by a relative value thereto. In general, when the gloss is high, specular reflectivity becomes large such that the surface appears shiny, and conversely, when the gloss is low, specular reflectivity decreases such that the surface appears rough. Similarly, in a reflective film, if specular reflectivity is high, frontal brightness also becomes high, and the film tends to have satisfactory light reflection properties.

If the gloss at 60°C on the side of the face of the present reflective film used for reflection is in the range of 50 to 90, satisfactory light reflection properties, and in particular, satisfactory brightness, are obtained. Such effects are particularly considerably observed in the case of a structure, in the internal construction of a liquid crystal television, in which sequentially layered from the liquid crystal side are a brightness enhancement sheet, a diffusion sheet, a diffusion panel, a cold cathode tube and a reflective film. Conversely, if gloss is under 50, diffusion reflectivity becomes high and frontal brightness decreases, such that satisfactory light reflection properties cannot be obtained. In addition, if gloss exceeds 90, when the film is integrated into a backlight, the line of the cold cathode tube (emission line) become readily apparent, which is not desirable.

Note that in the present reflective film, to set the above gloss to a prescribed range, the content in microparticulate filler of the B layer located on the outermost layer of the side of the face used for reflection is one of the important conditions, as described below.

<A layer>

The A layer is a layer comprising a resin composition A containing as main constituents a lactic acid series polymer or a polyolefin series resin, or a mixed resin thereof (these are collectively referred to as "A layer base resin") and a microparticulate filler.

(Lactic acid series polymer of the A layer)

As a lactic acid series polymer does not contain an aromatic ring in the molecular chain, the amount of ultraviolet light absorbed is extremely small, such that even if exposed to ultraviolet light and even if exposed to the light source of a liquid crystal display or the like, the film does not deteriorate or yellow due to ultraviolet light, allowing a decrease over time of light reflectivity of the film to be limited.

As lactic acid series polymers, those that have been chemically synthesized, those that have been fermentatively synthesized by a microorganism, or a mixture thereof, can be used.

The lactic acid series polymers such as those described above, has a refractive index (n) of less than 1.52. Through the use of an A layer containing a lactic acid series polymer with a refractive index (n) of less than 1.52 and a microparticulate filler, high light reflectivity can be realized by the refractive scattering at the interface between the aliphatic polyester series resin and the microparticulate filler. As this refractive scattering effect becomes greater when the difference of the refractive index of the aliphatic polyester series resin and the microparticulate filler becomes greater, a smaller refractive index is desirable as aliphatic polyester series resin, and from this point of view, lactic acid series polymer with an extremely low refractive index of less than 1.46 (in general on the order of 1.45) is one most desirable example. As a comparison, for an aromatic polyester, the refractive index is approximately 1.55 or greater.

As lactic acid series polymers, for instance, homopolymers of D-lactic acid or L-lactic acid, or copolymers thereof, can be cited. Concretely, poly(D-lactic acid), which structural unit is D-lactic acid, poly(L-lactic acid), which structural unit is L-lactic acid, furthermore, poly(DL-lactic acid), which is a copolymer of L-lactic acid and D-lactic acid, or mixtures thereof, can be cited.

As mentioned above, there are two types of optical isomers of lactic acid, that is to say L-lactic acid and D-lactic acid, and the crystallinity differs with the proportion of these two types of structural unit. For instance, in a random copolymer with a proportion of L-lactic acid and D-lactic acid of approximately 80:20 to 20:80, crystallinity is low, and giving a transparent completely non-crystalline polymer that softens at a glass transition point of around 60°C. On the other hand, in a random copolymer with a proportion of L-lactic acid and D-lactic acid of approximately 100:0 to 80:20, or approximately 20:80 to 0:100, the glass transition point is, similarly to the above copolymer, on the order of 60°C, but crystallinity is high.

In the present reflective film, those with a DL ratio in the lactic acid series polymer, that is to say, with a content ratio in D-lactic acid and L-lactic acid of D-lactic acid:L-lactic acid=100:0 to 85:15 or D-lactic acid:L-lactic acid=0:100 to 15:85 is preferred, among of them, those with D-lactic acid:L-lactic acid=99.5:0.5 to 95:5 or D-lactic acid:L-lactic acid=0.5: 99.5 to 5: 95, in particular, are preferred.

Lactic acid series polymers with a content ratio in D-lactic acid and L-lactic acid of 100:0 or 0:100 display extremely high crystallinity and a high melting point, and tend to have excellent heat resistance and mechanical properties. That is to say, when drawing or heat treating a film, the resin crystallizes, improving heat resistance and mechanical properties, which point is desirable. Meanwhile, lactic acid series polymers comprising D-lactic acid and L-lactic acid are flexible, improving the forming stability and drawing stability of the film, which point is desirable.

When considering the balance between the heat resistance and the forming stability and drawing stability of the reflective film obtained, a D-lactic acid and L-lactic acid constitution ratio of D-lactic acid:L-lactic acid=99.5:0.5 to 95:5 or D-lactic acid:L-lactic acid=0.5: 99.5 to 5: 95 is more desirable.

Lactic acid series polymers can be prepared by well-known methods such as condensation polymerization method and ring-opening polymerization method. For instance, with the condensation polymerization method, a lactic acid series polymer having an arbitrary composition can be obtained by a direct dehydration condensation polymerization of D-lactic acid, L-lactic acid, or a mixture thereof. In addition, with the ring-opening polymerization method" a lactic acid series polymer having an arbitrary composition can be obtained by ring-opening polymerization of lactide, which is a cyclic dimer of lactic acid, as necessary using a polymerization adjuster or the like, and in the presence of a given catalyst.

In the above-mentioned lactide, there are L-lactide, which is a dimer of L-lactic acid, D-lactide, which is a dimer of D-lactic acid, and DL-lactide, which is a dimer of D-lactic acid and L-lactic acid, and a lactic acid series polymer having an arbitrary composition and crystallinity can be obtained by, as necessary, mixing and polymerization thereof.

A lactic acid series polymer having a different D-lactic acid and L-lactic acid copolymerization ratio may also be blended. In this case, it is desirable to adjust the average value of the D-lactic acid and L-lactic acid copolymerization ratios of a plurality of lactic acid series polymers to fall within the above-mentioned DL ratio range.

In addition, a copolymer of lactic acid and another hydroxy carboxylic acid can also be used in the lactic acid series polymer. In so doing, as the "other hydroxy carboxylic acid unit" being copolymerized, bifunctional aliphatic hydroxy carboxylic acids such as glycolic acid, 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid and 2-hydroxy caproic acid, and lactones such as caprolactone, butyrolactone and valerolactone may be cited.

In addition, the lactic acid series polymer may contain, as necessary, as a small amount copolymerization constituent, a non-aliphatic carboxylic acid such as terephthalic acid and/or a non-aliphatic diol such as an ethylene oxide adduct of bis-phenol A, or lactic acid and/or a hydroxy carboxylic acid other than lactic acid.

It is desirable that the lactic acid series polymer has a high molecular weight, and for instance, those with a weight average molecular weight of 50,000 or greater are preferred, those with 60,000 to 400,000 are more preferred, among of them, those with 100,000 to 300,000 are particularly preferred. If the weight average molecular weight of the lactic acid series polymer is less than 50,000, there is the possibility that the mechanical properties of the obtained film become poor.

(Polyolefin series resin of the A layer)

As polyolefin series resin, those having a monoolefin polymer or a copolymer of polyethylene, polypropylene or the like as the main constituent, and the like, can be cited.

As concrete example of polyolefin series resin, polyethylene series resins such as low density polyethylene, linear low density polyethylene (ethylene-a-olefin copolymer), medium density polyethylene and high density polyethylene, polypropylene series resins such as polypropylene and ethylene-propylene copolymer, poly 4-methyl pentene, polybutene, ethylene-acetic acid vinyl copolymer, and the like, can be cited.

The polyolefin series resin may be one prepared using, for instance, a multi site catalyst such as Ziegler's catalyst, or one prepared using a single site catalyst such as metallocene-catalyst.

In addition, polyolefin series thermoplastic elastomers having ethylene propylene rubber, or the like, dispersed into and compounded with these polyolefin series resins can also be used.
These resins may be used alone or by mixing two or more species.

When considering formability when forming into a sheet as well as heat resistance when formed into a sheet, and the like, among the above-mentioned polyolefin series resins, linear low density polyethylene resin such as ethylene-$\alpha$-olefin copolymer, polypropylene resin, ethylene-propylene copolymer, propylene-butene copolymer, ethylene-propylene-butene ternary copolymer, and ethylene-propylene-diene ternary copolymer, and the like are preferred, among of them, either of polypropylene and ethylene-propylene copolymer or mixed resin thereof is particularly preferable.
Ethylene-propylene random copolymer is particularly preferred as the above ethylene-propylene copolymer.

From the point of view of refractive index as the A layer base resin, using among the above-mentioned polyolefin series resins, a polyolefin series resin with a refractive index (n) of less than 1.52 is used.

In the A layer, light reflectivity is displayed using the refractive scattering at the interface of the base resin and microparticulate filler or the like. This refractive scattering effect becomes larger as the difference in the refractive indices of the base resin and the microparticulate filler or the like becomes larger. Therefore, using a resin having a small refractive index as the A layer base resin is preferred, so that the refractive index difference with the microparticulate filler or the like becomes larger; thus using a polyolefin series resin having a refractive index of less than 1.52 is used.

(Microparticulate filler of the A layer)

Organic fine powder, mineral fine powder, and the like, can be cited as microparticulate filler in the A layer.

As organic fine powder, using at least one species chosen from cellulose series powders such as wood powder and pulp powder, polymer beads, polymer hollow particle and the like, is preferred.

As mineral fine powder, using at least one species chosen from calcium carbonate, magnesium carbonate, barium carbonate, magnesium sulfate, barium sulfate, calcium sulfate, zinc oxide, magnesium oxide, calcium oxide, titanium oxide, alumina, aluminum hydroxide, hydroxyapatite, silica, mica, talc, kaolin, clay, glass powder, asbestos powder, zeolite, silicate clay, and the like, is preferred.

Among them, from the point of view of a large refractive index difference with the A layer base resin and the ability to obtain excellent reflection capability, mineral fine powder with a refractive index of 1.6 or greater, for instance calcium carbonate, barium sulfate, titanium oxide or zinc oxide is preferred, among of them, titanium oxide is particularly preferred.

Titanium oxide has a considerably higher refractive index compared to other mineral fine powders, allowing the refractive index difference with the A layer base resin to be considerably large, such that an excellent reflection capability can be obtained with a smaller mixing amount compared to when other fillers are used. In addition, using titanium oxide, a reflective film with a high reflection capability can be obtained even if the thickness of the film is thin.

Among the titanium oxides, as microparticulate filler in the A layer, crystal type titanium oxides such as anatase type and rutile type are preferred, among of them, from the point of view of increasing the refractive index difference with the base resin, titanium oxide having a refractive index of 2.7 or greater is preferred. On this point, using titanium oxide with the rutile type crystal type is preferred. The larger the refractive index difference, the larger the refractive scattering effect of the light at the interface of the base resin and titanium oxide, allowing the film to be conferred readily with light reflectivity.

In addition, to confer high light reflectivity to the film, titanium oxide having small light absorption capability with respect to visible light is preferred. To reduce light absorption capability of titanium oxide, the amount of color element contained in titanium oxide is preferably small, and from this point of view, titanium oxide with a niobium content of 500ppm or less is preferred. It is even more preferred if, at the same time, the vanadium content is 5ppm or less.

Titanium oxide prepared by the chlorine method process has high purity, and according to this preparation method, titanium oxide having a niobium content of 500ppm or less (referred to as "high purity titanium oxide") can be obtained.

In the chlorine method process, the high purity titanium oxide can be obtained by reacting rutile ore having titanium oxide as the main constituent with chlorine gas in a high temperature oven at on the order of 1000°C, first to generate titanium tetrachloride, and then combusting this titanium tetrachloride with oxygen.

It is desirable that the microparticulate filler is present in the A layer base resin in a dispersed state. Therefore, as titanium oxide used as microparticulate filler of the A layer, those having the surface thereof coated with inert inorganic oxide are preferred.

Coating the surface of titanium oxide with inert inorganic oxide allows photocatalytic activity of titanium oxide to be suppressed, allowing the light resistance (durability when receiving illumination of light) of the film to be increased.

As inert inorganic oxide for coating the surface of titanium oxide, at least one species chosen from the group comprising alumina, silica and zirconia is preferred. Coating with these inert inorganic oxides allows light resistance of the film to be increased without compromising the high reflection capability obtained via titanium oxide. In addition, it is even more desirable to combine two or more species among the inert inorganic oxides given in the previous description for concomitant application, among of them, silica and other inert inorganic oxides (for instance, alumina and zirconia) are combined particularly preferably for concomitant application in coating.

The surface treatment amount of the inert inorganic oxide is preferably an amount of 1 to 7 percent in mass with respect to the total mass of titanium oxide after surface treatment. If the surface treatment amount is one percent in mass or greater, high light reflectivity can be maintained readily, which is desirable. In addition, if the surface treatment amount is 7 percent in mass or less, dispersability into the A layer base resin becomes satisfactory, allowing a homogeneous film to be obtained, which is desirable.

In order to improve dispersability into base resin, it is desirable that the surface of titanium oxide is surface-treated with at least one species of organic compound chosen from the group comprising titanium coupling agent, silane coupling agent, and the like, among of them, silane coupling agent is particularly preferred.

As silane coupling agent, for instance, in addition to alkoxy silanes having alkyl group, alkenyl group, amino group, aryl group, epoxy group or the like, chloro silanes, poly alkoxy alkyl siloxanes and the like, may be cited. Concretely, for instance, amino silane coupling agents such as n-β (amino ethyl) γ-amino propyl methyl dimethoxy silane, n-β (amino ethyl) γ-amino propyl methyl trimethoxy silane, n-β (amino ethyl) γ-amino propyl methyl triethoxy silane, γ-amino propyl triethoxy silane, γ-amino propyl trimethoxy silane and n-phenyl-γ-amino propyl trimethoxy silane, and alkyl silane coupling agents such as dimethyl dimethoxy silane, methyl trimethoxy silane, ethyl trimethoxy silane, propyl trimethoxy silane, n-butyl trimethoxy silane, n-butyl triethoxy silane, n-butyl methyl dimethoxy silane, n-butyl methyl diethoxy silane, isobutyl trimethoxy silane, isobutyl triethoxy silane, isobutyl methyl dimethoxy silane, tert-butyl trimethoxy silane, tert-butyl triethoxy silane, tert-butyl methyl dimethoxy silane and tert-butyl methyl diethoxy silane can be cited.

These silane coupling agents can be used respectively alone or by combining two or more species.
Among the above, amino silane coupling agent is preferred as silane coupling agent used in the present reflective film.

In addition, in order to improve dispersability into the base resin, the surface of titanium oxide may be treated with a siloxane compound or a multivalent alcohol.

As siloxane compound used in so doing, for instance, dimethyl silicone, methyl hydrogen silicone, alkyl-modified silicone, and the like, can be cited. In addition, as multivalent alcohol, for instance, trimethylol ethane, trimethylol propane, tripropanol ethane, pentaerythritol, and the like, can be cited, among of them, trimethylol ethane and trimethylol propane are particularly preferred.

These siloxane compounds and multivalent alcohol compounds can be respectively used alone or by combining two or more species.

The surface treatment amount by the above titanium coupling agent, silane coupling agent, siloxane compound, or multivalent alcohol, and the like, is preferably of 0.05 to 3 percent in mass with respect to the total mass of titanium oxide after surface treatment. If the surface treatment amount is 0.05 percent in mass or greater, the moisture adsorption of titanium oxide can be prevented, allowing agglutination of titanium oxide particles to be prevented and dispersability to be increased. If dispersability of titanium oxide is improved, occurrence of clumps is suppressed, and the appearance of the film product surface is uncompromised, and rupture problems during drawing membrane preparation do not occur. In addition, sufficient surface area of the interface between the base resin and titanium oxide is secured, allowing the film to be provided with high light reflectivity, and furthermore, if the surface treatment amount is 3 percent in mass or less, slipperiness of titanium oxide particle become appropriate, more stable extrusion and membrane preparation become possible, which is desirable.

Note that the above-mentioned "surface treatment amount" refers to the proportion in mass of treating agent (for instance, inert inorganic oxide, organic compound and the like) used for the surface treatment amounting to the total mass of titanium oxide after surface treatment.

When using a microparticulate filler other than [made of] titanium oxide, it is also desirable to perform surface treatment similarly to titanium oxide in order to improve the dispersability into the base resin of the A layer. For instance, it is desirable to perform surface treatment with a siloxane compound, a multivalent alcohol series compound, an amine series compound, a fatty acid, a fatty acid ester, or the like, similarly to above.

The average particle diameter of titanium oxide as microparticulate filler of the A layer is preferably 0.1μm to 1μm and more preferably 0.2μm to 0.5μm.

If the particle diameter of titanium oxide is 0.1μm or greater, dispersability into the base resin of the A layer is satisfactory, allowing a homogeneous film to be obtained. In addition, if the particle diameter is 1 μm or less, the interface between the A layer base resin and titanium oxide is formed more tightly, allowing the reflective film to be provided with an even better light reflectivity.

Regarding microparticulate filler other than titanium oxide, the size thereof has a size of preferably 0.05μm to 15μm average particle diameter, and more preferably 0.1μm to 10μm. If the average particle diameter of the microparticulate filler is 0.05μm or greater, light scattering reflection is generated concomitantly to the roughening of the film surface, allowing the gloss to be increased. In addition, if the average particle diameter of the microparticulate filler is 15 μm or less, the interface between the A layer base resin and the microparticulate filler is formed more tightly, allowing the reflective film to be provided with an even better light reflectivity.

When light reflectivity, mechanical properties, productivity, and the like, of the film are considered, it is important that the content in microparticulate filler (in particular titanium oxide) in the A layer is in a proportion of 10 to 80 percent in mass with respect to the resin composition A constituting the A layer, preferably 10 to 70 percent in mass and particularly 10 to 60 percent in mass, among of them, particularly 20 to 45 percent in mass.

In the A layer, if the content in microparticulate filler with respect to the resin composition A is 10 percent in mass or greater, surface area of the interface between the base resin and the microparticulate filler can be secured enough, allowing the film to be provided with an even higher light reflectivity. In addition, if the content in microparticulate filler is 80 percent in mass or less, mechanical properties required for the film can be secured.

From the point of reflection capability of the present reflective film, porosity (proportion occupied by void in the film) of the A layer is preferably 35% or less, among of them, a range of 3 to 35% is preferred, in particular, 5% or greater, and furthermore 7% or greater, are further preferred.

If porosity of the A layer exceeds 35%, the mechanical strength of the film decreases, such that the film ruptures during film manufacturing, or durability such as heat resistance is sometimes insufficient during use.

<B layer>

The B layer is a layer comprising a resin composition B containing as main constituents a lactic acid series polymer or a polyolefin series resin or a mixed resin thereof (these are collectively referred to as "B layer base resin"), and a microparticulate filler, and is the layer that constitutes the outermost layer of the side of the face used for reflection, when used as a reflective film.

The reflective film may contain therein two or more B layers; however, at least one layer among these must be the outermost layer of the side of the face used for reflection.

(B layer base resin)

For the B layer base resin, similar lactic acid series polymer similarly to the A layer can be used.

(Microparticulate filler of the B layer)

It is important that the content in microparticulate filler in the B layer is greater than 0.1 percent in mass but less than 5 percent in mass with respect to the resin composition B constituting the B layer, and preferably greater than 0.1 percent in mass but less than 3 percent in mass, among of them, greater than 0.1 percent in mass but less than 1 percent in mass is particularly preferred.

When the reflective film is integrated into a liquid crystal display or the like, if the content ratio of microparticulate filler in the B layer becomes greater than 5 percent in mass, a tendency of the brightness to decrease considerably is observed, while when microparticulate filler is not contained at all (0 percent in mass) the brightness does not improve. It was realized that the brightness became higher when a certain amount of microparticulate filler, concreately is in a range of the following: greater than 0.1 percent in mass but less than 5 percent in mass, and in particular, greater than 0.1 percent in mass but less than 3 percent in mass, among of them" in particular, greater than 0.1 percent in mass but less than 1 percent in mass. Regarding the reason for this, it can be speculated that the light transmittance of the brightness enhancement sheet becomes high when the light enters the brightness enhancement sheet with a certain incident angle compared to perpendicular incidence, decreasing loss and improving brightness, such that it is preferable to diffuse the light with the microparticulate filler in the B layer, while if the content of microparticulate filler in the B layer is excessive, the gloss decreases and concomitantly thereto, the brightness decreases, such that the brightness improves when a certain amount of microparticulate filler is contained in the B layer, that is to say, greater than 0.1 percent in mass but less than 5 percent in mass.

In addition, if the B layer as the outermost layer of the reflective film does not contain a microparticulate filler, the film surface is too smooth, and films scrape against each other during manufacture or during transport, or the like, becoming easily damaged due to a so-called a winding gap, such that also from this point, it is desirable that a microparticulate filler is contained in the B layer at a proportion greater than 0.1 percent in mass but less than 5 percent in mass.

Furthermore, if the B layer as the outermost layer of the reflective film does not contain a microparticulate filler, detachment between the A layer and the B layer occurs easily, such that also from this point, it is desirable that a microparticulate filler is contained in the B layer at a proportion greater than 0.1 percent in mass but less than 5 percent in mass.

As microparticulate fillers in the B layer, those similar to the microparticulate fillers in the A layer can be used. With the proviso that for the microparticulate fillers in the B layer, the average particle diameter thereof is preferably 0.3μm to 15μm, and more preferably 0.5μm to 10μm.

If the particle diameter of the microparticulate filler is 0.3μm or greater, light scattering reflection is generated concomitantly to the roughening of the surface of the film, allowing the reflection directionality of the film to become small. In addition, if the particle diameter of the microparticulate filler is 15 μm or less, the interface between the B layer base resin and the microparticulate filler is formed more tightly, allowing the reflective film to be provided with an even better light reflectivity.

(Other constituents)

The resin composition A and resin composition B may contain other resins or other additives to within a range that does not impair the functions of the base resin and the microparticulate filler. For instance, hydrolysis prevention agent, oxidation inhibitor, light stabilizer, heat stabilizer, lubricant, dispersant, ultraviolet light absorber, white pigment, fluorescence whitening agent, and other additives can be added.
Among of them, a hydrolysis prevention agent is preferably added with the purpose of conferring durability, which will be described below in detail.

In recent years, liquid crystal displays are in use in car navigation systems for automobiles, small on-board televisions, and the like, in addition to displays for personal computers, such that those that are resistant to high temperature and high humidity are needed. Therefore, a hydrolysis prevention agent is preferably added to a reflective film containing an aliphatic polyester series resin, with the purpose of conferring durability.

As one preferred example of hydrolysis prevention agent, carbodiimide compounds can be cited.
As carbodiimide compounds, for instance, those having a base structure of the following general formula can be cited as those that are preferred.

$$-(N=C=N-R-)_n-$$

In the formula, n represents an integer of one or greater, R represents an organic series bond unit. For instance, R can be any of aliphatic, alicyclic or aromatic. In addition, for n, an adequate integer is selected from 1 to 50, in general.

As concrete examples of carbodiimide compound, bis(dipropyl phenyl) carbodiimide, poly(4,4'-diphenyl methane carbodiimide), poly(p-phenylene carbodiimide), poly(m-phenylene carbodiimide), poly(tolyl carbodiimide), poly(diisopropyl phenylene carbodiimide), poly(methyl-diisopropyl phenylene carbodiimide), poly(tri isopropyl phenylene carbodiimide) and the like, and monomers thereof, may be cited. These carbodiimide compound may be used alone, or may be used by combining two or more species.

The carbodiimide compound is preferably added at a proportion of 0.1 to 3.0 parts in mass with respect to100 parts in mass of the aliphatic polyester series resin constituting the resin composition A or B.

If the amount of carbodiimide compound added is 0.1 parts in mass or greater, sufficient improvement is displayed in the obtained film in terms of resistance to hydrolysis. In addition, if the amount of carbodiimide compound added is 3.0 parts in mass or less, there is little pigmentation of the obtained film, allowing high light reflectivity to be obtained.

Note that in the present reflective film, the A layer may contain a constituent other than resin composition A in a range that does not impair the function of the resin composition A. In addition, the B layer may contain a constituent other than resin composition B in a range that does not impair the function of the resin composition B.

(Layer constitution)

It suffices that the present reflective film is constituted in such a way that an A layer comprising a resin composition A and a B layer comprising a resin composition B are provided, the B layer being positioned on at least one side of the A layer and becoming the outermost layer of the side of the face used for reflection when the film is used as a reflective film. Therefore, the film may be one comprising, from the side of the face used for reflection, a two-layer constitution B layer/A layer, a three-layer constitution B layer/A layer/B layer, or a layer constitution of four-layer or more B layer/A layer/.. (the previous "··" represents arbitrary layers).

The thickness ratio of the A layer and the B layer for each layer is preferably 20:1 to 1:1. If the ratio becomes smaller than 1:1, the gloss decreases, such that satisfactory light reflection properties become difficult to obtain. Conversely, if the ratio is greater than 20:1, a decrease in reflectance occurs.

A metallic thin film layer and a protective layer may be layered in this order on the face on the back side of the present reflective film, that is to say, on the face on the opposite side to the face used for reflection.

This metallic thin film layer can be formed by vapor depositing metal. For instance, it can be formed by vacuum deposition method, ionization vapor deposition method, sputtering method, ion plating method, and the like.

As metal to be vapor deposited, a material with high reflectance can be used with no particular limitation, and in general, silver, aluminum, and the like are preferred, among of them, silver is particularly preferred.

The metallic thin film layer may be formed by preparing beforehand a metallic thin film layer film by forming a metallic thin film layer on a synthetic resin film (also referred to as "middle layer"), and layering this metallic thin film layer film on the present reflective film.

In so doing, the metallic thin film layer of the metallic thin film layer film and the present reflective film may be overlapped, in addition, the middle layer of the metallic thin film layer film and the present reflective film may be overlapped, and layering while adhering the overlapping faces partially or over the entire faces is sufficient.

As adhesion method, well-known adhesion methods that use various adhesives and well-known heat adhesion methods that do not use adhesive can be cited. Among of them, adhesion methods that do not involve heat and methods for heat-adhering at temperatures of 210°C or below are preferred on the points that they allow the voids inside the present reflective film to be retained and a high reflectance to be maintained.

The metallic thin film layer may be a mono-layer product or a multi-layer product of a metal, or a mono-layer product or a multi-layer product of a metal oxide, as well as a laminated body of two or more layers of a mono-layer product of a metal and a mono-layer product of a metal oxide.

The thickness of the metallic thin film layer, is preferably adjusted according to the material forming the layer, the layer forming method, and the like, and is in general, preferably within the range of 10nm to 300nm, among of them, more preferably within the range of 20nm to 200nm. If the thickness of the metallic thin film layer is 10nm or greater, sufficient reflectance is obtained. Meanwhile, if the thickness of the metallic thin film layer is 300 nm or less, manufacturing efficiency is good, which is desirable.

To show an example of layer constitution when layering a metallic thin film layer, the layer constitution comprising the present reflective film/(as necessary, anchor coat layer)/metallic thin film layer/protective layer, or, the present reflective film/middle layer/(as necessary, anchor coat layer)/metallic thin film layer/protective layer, and the like, can be cited.

Note that the present reflective film must be placed on the side that is illuminated by light, and if done so, another layer may be present between each of the above layers, and in addition, each layer of the present reflective film, the metallic thin film layer, and the like, may be constituted from a plurality of layers.

(Film thickness)

There are no particular limitations on the thickness of the present reflective film, and it is in general 30μm to 500μm, and when handleability in practical terms is considered, it is preferably within the range of 50μm to 500μm. In particular, as a reflective film for small, thin reflective panel applications, the thickness is preferably 30μm or greater but less than 100 μm. If a reflective film with such a thickness is used, use is also possible in small, thin liquid crystal display, or the like, for instance, for notebook personal computers, cellular phones, and the like.

(Reflectance)

The present reflective film has a surface reflectance with respect to light at 550nm wavelength of 97% or greater. If the reflectance is 95% or greater, satisfactory reflection characteristics are exhibited, allowing a screen such as a liquid crystal display to be provided with sufficient luminosity. Note that, reflectance here means, reflectance of the surface that is on the side illuminated by light (the side of the face used for reflection).

The present reflective film can retain excellent reflectance such as described above, even after exposure to ultraviolet light. As described above, since the present reflective film allows series resin not containing aromatic ring in the molecular chain to be used as the base resin, the film does not deteriorate due to ultraviolet light, allowing an excellent reflectivity to be retained.

(Biodegradability)

If a lactic acid series polymer has been used as each layer base resin, when processed by land filling, the present reflective film allows degradation by a microorganisms and the like, and is thus conferred with the characteristic that various problems accompanying disposal are not generated. The lactic acid series polymer is biodegraded by microorganisms and the like in the soil, after ester bond moieties thereof are hydrolyzed in the soil and the molecular weight decreases to on the order of 1,000.

Conversely, an aromatic polyester series resin has highly stable intermolecular bonds, and hydrolysis of ester bond moieties does not occur easily. Therefore, even if aromatic polyester series resin and polypropylene series resin are processed by land filling, the molecular weight does not decrease, and biodegradation by microorganisms and the like also does not occur. Resulting from this, problems are triggered, such as, by remaining in the soil over a long term, accelerating the shortening of the life of a land for landfill treatment of waste, and compromising the natural landscape and living environment of wild animals and plants.

(Preparation method)

Hereinafter, one example of preparation method of the present reflective film will be described, with no limitation what so ever to the following preparation method. In particular, in the following, preparation methods when aliphatic polyester series resins are used as the A layer and the B layer base resins will be described, preparation is possible similarly to the above when polyolefin series resins, or mixed resins of lactic acid series polymer and polyolefin series resin are used as the A layer and the B layer base resins.

First, a microparticulate filler, further, as necessary, a hydrolysis prevention agent and other additives, and the like, are respectively mixed in prescribed amounts with a lactic acid series polymer to prepare resin compositions A B, respectively.

Concretely, resin compositions A and B are prepared respectively by adding a microparticulate filler, further, as necessary, a hydrolysis prevention agent and other additives, and the like, to an aliphatic polyester series resin and mixing with a ribbon blender, a tumbler or Henschel mixer, or the like, and then, using a Banbury mixer, a mono axial or biaxial extruder, or the like, kneading at the melting point of the aliphatic polyester series resin or higher temperature (for instance, 170°C to 230°C in the case of a lactic acid series polymer).

In so doing, prescribed amounts of a lactic acid series polymer, microparticulate filler, hydrolysis prevention agent and the like, may be added by separate feeders, or the like, to prepare the resin compositions A and B respectively, in addition, a so-called master batch, in which high concentrations of microparticulate filler, hydrolysis prevention agent and the like, are mixed in an aliphatic polyester series resin, may be prepared beforehand, and this master batch and aliphatic polyester series resin may be mixed to prepare the resin compositions A and B respectively at the desired concentration.

Next, the resin compositions A and B obtained as above are melted with their respective extruder, extruded into a sheet shape and layered.

For instance, resin composition A and resin composition B are respectively dried, then respectively supplied to extruders, heated at the melting point of the resin or a greater temperature and melted. In so doing, the resin composition A and resin composition B may be respectively supplied to the extruders without drying, and if they are not dried, it is desirable to use a vacuum vent during melt-extrusion.

Conditions such as extrusion temperature are set preferably by paying attention to a problem of the decrease in molecular weight due to decomposition, for instance, the extrusion temperature is preferably set within a range of 170°C to 230°C in the case of a lactic acid series polymer.

After extrusion, for instance, it suffices to extrude the molten resin composition A and resin composition B respectively from a slit-shaped outlet of a T-die to be layered, and tightly attach and solidify this laminate on a cooling roll to form a cast sheet.

In the present reflective film, after the resin composition A and resin composition B have been subjected to melt-membrane forming and layered as described above, it is desirable to draw this laminate 1.1 times or greater in at least one axial direction.

Drawing is important also from the point of view of forming voids inside the film to increase reflectance. That is to say, when drawing is carried out at a drawing temperature appropriate to aliphatic polyester series resin, the aliphatic polyester series resin, which is the matrix, becomes drawn, while the microparticulate filler attempts to remain in the same state, and, as indicated previously, since the drawing behaviors of the aliphatic polyester series resin and the microparticulate filler are different at drawing, the interface between the aliphatic polyester series resin and microparticulate filler detach and voids are formed, allowing the reflectance to be increased further.

When forming voids inside the film, drawing the obtained cast sheet 5 times or greater in surface area scale factor is preferred, and drawing 7 times or greater is more preferred. By drawing 5 times or greater in surface area scale factor, a porosity of 5% or greater can be realized, by drawing 7 times or greater, a porosity of 20% or greater can be realized, and by drawing 7.5 times or greater, a porosity of 30% or greater can also be realized.

In addition, the present reflective film is preferably drawn in two axial directions. A higher porosity can be obtained by drawing biaxially, allowing the reflectance of the film to be improved further. In addition, if the film is only uniaxially drawn, the formed void can only take a fibrous morphology drawn in one direction, but by drawing biaxially, this void takes a discoidal morphology that is drawn in both vertical and horizontal directions. That is to say, by drawing biaxially, the detached surface area of the interface of the resin and microparticulate is increased, whitening of the film proceeds, and as a result of this, the light reflectivity of the film can be increased even further. Furthermore, when drawing biaxially, anisotropy no longer exists in the shrinking direction of the film, allowing the heat resistance of the reflective film to be improved, and furthermore, the mechanical strength can also be increased.

Note that there are no particular limitations on the drawing sequence in the biaxial drawing, and for instance, whether it is simultaneous biaxial drawing or successive drawing does not matter. After melt-membrane forming using drawing equipment, drawing along MD (film draw direction) by roll drawing and then drawing along TD (direction at right angle from the previous MD) by tenter drawing is adequate, and biaxial drawing may be carried out by tubular drawing or the like.

The drawing temperature when drawing a cast sheet is, for instance when the A layer base resin is a lactic acid series polymer, preferably 50 to 90°C. If the drawing temperature is 50°C or greater, the film does not rupture at drawing, and if 90°C or less, the drawing orientation becomes high, and as a result of this, the porosity becomes large, thus allowing a high reflectance to be obtained.

In addition, in the present reflective film, heat fixing to be carried out after drawing is preferred in order to confer heat resistance and dimensional stability to the film.

The processing temperature for heat fixing the film is preferably 90 to 160°C, and more preferably 110 to 140°C. The processing time required for heat fixing is preferably one second to 5 minutes. In addition, there are no particular limitations on the drawing equipment or the like, however, tenter drawing which allows heat fixing processing to be carried out after drawing is preferred.

(Application)

The present reflective film has the characteristics of having high light reflectivity, and high gloss and brightness on the side of the face used for reflection. Therefore, it is excellent as a reflective film used in displays for personal computers, televisions and the like, and in reflective panels of lighting equipments, illuminated signs, and the like, and it is particularly excellent as a reflective film in applications where thinning is required.

In recent years, demands for light, small notebook computers, on-board small televisions and the like have been increasing, and thin liquid crystal panels responding thereto are sought. Therefore, thinning is required also as a reflective film, and the present reflective film can also respond to this demand, allowing a reflective film having a total thickness 100 µm or less to be realized.

Concretely, a reflective panel used in liquid crystal display and the like can be formed using the present reflective film. For instance, a reflective panel can be formed by layering the present reflective film over a metal plate or a resin plate, and this reflective panel is useful as a reflective panel used in liquid crystal displays, lighting equipments, illuminated signs and the like.

Hereinafter, one example of preparation method for such a reflective panel will be described.

As methods for covering a metal plate or a resin plate with the present reflective film, methods using an adhesive, methods for heat fusing without using an adhesive, methods for adhering via an adhesive sheet, methods for extrusion-coating, and the like, exist, with no particular limitations.

For instance, the face of the metal plate or resin plate on the side where the reflective film is to be pasted can be coated with an adhesive of the polyester series, polyurethane series, epoxy series or the like, and the present reflective film be pasted. In this method, using a coating equipment generally in use, such as, reverse roll coater and kiss roll coater, the surface of a metal plate or the like where the reflective film is to be pasted is coated with an adhesive in such a way that the adhesive film thickness becomes on the order of $2\mu m$ to $4\mu m$ after drying. Then, drying and heating of the coated face are carried out with an infrared radiation heater and a hot air heat oven, and while retaining the surface of the plate at a prescribed temperature, wrapping with reflective film directly using a roll laminator and cooling allows the reflective panel to be obtained.

In this case, if the surface of the metal plate or the like is retained at 210°C or less, the light reflectivity of reflective panel can be maintained high, which is desirable.

The surface temperature of the metal plate and the like is preferably 160°C or greater.

[Examples]

Hereinafter, the present invention will be described further concretely showing examples; however, the present invention is not limited to these, and a variety of applications are possible within limits that do not depart from the technical thoughts of the present invention.

Note that the measurement and evaluations shown in the examples were performed as shown in the following. Herein, the drawing (flowing) direction of the film is indicated as MD, and the orthogonal direction thereto as TD.

(Measurement and evaluation methods)

(1) Average particle diameter

A powder specific surface measurement instrument (permeation method) model "SS-100" manufactured by Shimadzu Corporation was used. A sample tube with a cross-section of $2cm^2$ and a height of 1 cm was filled with 3g of sample, and with a 500mm water column, the time for 20cc air permeation was measured, from which the average particle diameter was calculated.

(2) Reflectance (%)

A spectrophotometer ("U-4000", manufactured by Hitachi, Ltd.) was fitted with an integrating sphere, and reflectance with respect to a 550nm wavelength light was measured. In so doing, the side of the face used for reflection, that is to say, light was illuminated from the side of the face of the reflective film. Note that, prior to measurement, the photometer was set so that the reflectance of alumina white sheet was 100%.

(3) Gloss

The gloss of the film was measured by setting the incident angle and the light-receiving angle to 60°, according to JIS Z-8741. With the proviso that gloss was measured by illuminating light on the side of the face used for reflection (that is to say, the B layer side of the reflective film).

Digital variable angle gloss meter model UGV-5DP (manufactured by Suga Test Instruments Co., Ltd.) was used for gloss measurements.

(4) Brightness

The prepared reflective film was integrated into a 26 inch liquid crystal backlight unit (manufactured by SAMSUNG Corporation: LTA260W-02), CCFL, diffusion panel, diffusion sheet and DBEF-D were superimposed in this order, and measurement of the central brightness was carried out using a brightness meter (manufactured by TOPCON TECHNOHOUSE CORPORATION: BM-7).

(5) Niobium concentration in titanium oxide (ppm)

The niobium content was measured based on JIS M-8321 "Titanium ores - Methods for determination of niobium". That is to say, 0.5g of sample (titanium oxide) was weighted out, this sample was transferred to a crucible made of nickel containing 5g of molten combined agents [sodium hydroxide:sodium peroxide =1:2 (mass ratio)], stirred, then, the surface of this sample was coated with approximately 2g of anhydrous sodium carbonate, and the sample was heat-melted inside the crucible to form a melt. This melt was left to cool while still in the crucible, then, 100ml of hot water and 50ml of hydrochloric acid were added by small amounts to dissolve the melt, and water was further added to fill to 250ml. This solution was measured with an ICP optical emission spectrometer to determine the niobium content. With the proviso that the measurement wavelength was 309.42nm.

(6) Vanadium content in titanium oxide (ppm)

An amount of 0.6g of sample (titanium oxide) was weighed out and dissolved in a microwave sample decomposition apparatus after adding 10ml of nitric acid, the obtained solution was filled to 25ml, and quantification analysis was carried out using an ICP optical emission spectrometer.
Model MDS-2000 manufactured by Aztec was used for the microwave sample decomposition apparatus, and the decomposition operation was carried out according to the steps in the following Table 1. In addition, the measurement wavelength was 311.07nm.
[Table 1]

| Step | Setting | Decomposition time_ (min) | Intra-vessel pressure upper limit (psi) |
|---|---|---|---|
| 1 | 600 W x 30% | 10 | 40 |
| 2 | 600 W x 30% | 10 | 100 |
| 3 | 600 W x 30% | 20 | 140 |
| 4 | 600 W x 30% | 20 | 170 |
| 5 | 600 W x 30% | 20 | 200 |

(7) Refractive index

The refractive index of the resin was measured based on the A method of JIS K-7142.

(8) Porosity inside the A layer (%)

The density of film prior to drawing (referred to as "undrawn film density") and the density of film after drawing (referred to "drawn film density") were measured and substituted in following formula to determine the porosity of the film.
$$\text{Porosity (\%)} = \{(\text{undrawn film density} - \text{drawn film density}) / \text{undrawn film density}\} \times 100$$

[Example 1]

(Preparation of resin composition A for the A layer)

Pellets of a lactic acid series polymer having a weight average molecular weight of 200,000 (manufactured by Cargill Dow Polymers, NW4032D; D isomer:L isomer=1.5:98.5; glass transition temperature: 65°C) and titanium oxide with an average particle diameter of $0.21\mu$m (niobium concentration: 150ppm; with surface treatment by alumina and silica) were mixed at a mass proportion of 50:50 to obtain a mixture. To 100 parts in mass of this mixture, as hydrolysis prevention agent, 2.5 parts in mass of carbodiimide modified isocyanate (manufactured by Nisshinbo Industries, Inc., carbodilite LA-1) was added and mixed, then, [the mixture] was pelletized using a biaxial extruder to prepare a so-called master batch. Then, this master batch and the previous lactic acid series polymer were mixed at a mass proportion of 60:40 to prepare the resin composition A.

(Preparation of resin composition B for the B layer)

To pellets of a lactic acid series polymer having a weight average molecular weight of 200,000 (manufactured by Cargill Dow Polymers, NW4032D; D isomer:L isomer=1.5:98.5; glass transition temperature: 65°C), silica with an average particle diameter of 2μm was added, furthermore 2.5 parts in mass of hydrolysis prevention agent (bis(dipropylphenyl)carbodiimide) was further added and mixed, then, the mixture was pelletized using a biaxial extruder to prepare a so-called master batch. Then, this master batch and the previous lactic acid series polymer were mixed at a mass proportion of 60:40 to prepare the resin composition B.
Note that the quantity of above-mentioned silica in the resin composition B was 0.2 percent in mass.

(Preparation of film)

The resin compositions A and B were respectively supplied to extruders A and B which were heated at 220°C, and from the extruders A and B, the resin compositions A and B in molten state were extruded at 220°C respectively using a T-die into a sheet-shape so as to have the 3 layer constitution B layer/A layer/B layer, and then cooled and solidified to form a film. At a temperature of 65°C, the obtained film was biaxially drawn, 2.5 times along MD and 2.8 times along TD simultaneously, and then heat-treated at 140°C to obtain a reflective film having a thickness of 250μm (A layer: 210μm; B layer: 20μm).
Measurements of gloss, reflectance and brightness were carried out on the obtained reflective film. The results are shown in Table 2.

[Example 2]

A reflective film having a thickness of 250μm (A layer: 210μm; B layer: 20μm) was obtained similarly to Example 1, except that, in the preparation of resin composition B for the B layer, silica was added so as to obtain 2 percent in mass of the resin composition B, as shown in Table 2. Measurements of gloss, reflectance and brightness were carried out on the obtained reflective film. The results are shown in Table 2.

[Example 3]

A reflective film having a thickness of 250μm (A layer: 210μm; B layer: 20μm) was obtained similarly to Example 1, except that, in Example 1, in regard to resin composition B for the B layer, instead of silica, titanium oxide having an average particle diameter of 0.25μm (niobium concentration: 430ppm; with surface treatment by alumina, silica and zirconia) was added at a proportion of 0.2 percent in mass to prepare the master batch, as shown in Table 2. Measurements of gloss, reflectance and brightness were carried out on the obtained reflective film. The results are shown in Table 2.

[Comparative Example 1]

A reflective film having a thickness of 250μm (A layer: 210μm; B layer: 20μm) was obtained similarly to Example 1, except that, in the preparation of resin composition B for the B layer, silica was added so as to obtain 0.1 percent in mass of the resin composition B, as shown in Table 2. Measurements of gloss, reflectance and brightness were carried out on the obtained reflective film. The results are shown in Table 2.

[Comparative Example 2]

A reflective film having a thickness of 250μm (A layer: 210μm; B layer: 20μm) was obtained similarly to Example 1, except that, in the preparation of resin composition B for the B layer, silica was added so as to obtain 20 percent in mass of the resin composition B, as shown in Table 2. Measurements of gloss, reflectance and brightness were carried out on the obtained reflective film. The results are shown in Table 2.
[Table 2]

| | Microparticulate filler of B layer | Amount of Microparticulate filler of B layer | Gloss | Reflectance (%) | Brightness (cd/cm$^2$) |
|---|---|---|---|---|---|
| Example 1 | Silica | 0.2 percent in mass | 66.7 | 100.3 | 7860 |
| Example 2 | Silica | 2 percent in mass | 53.4 | 99.9 | 7740 |
| Example 3 | Titanium oxide | 0.2 percent in mass | 59.0 | 100.3 | 7800 |
| Comparative Example 1 | Silica | 0.1 percent in mass | 80.5 | 98.9 | 7650 |
| Comparative Example 2 | Silica | 20 percent in mass | 35.4 | 99.8 | 7590 |

As Examples 1 and 2 and Comparative Examples 1 and 2 only differ in their content of microparticulate filler in the B layer, the relationships between the content in these microparticulate fillers and gloss and brightness are examined.

From the results of Table 2, regarding gloss, there is a decrease as the content in microparticulate filler in the B layer increases, however, regarding brightness, it is higher for 0.2 percent in mass compared to 0.1 percent in mass, decreasing slightly when 2 percent in mass is reached but maintaining a preferred range, furthermore, it decreases notably when 20 percent in mass is reached, which is greater than 5 percent in mass, such that the desirable range is thought to be in a range greater than 0.1 percent in mass but less than 5 percent in mass, in particular greater than 0.1 percent in mass but less than 3 percent in mass, among of them" in particular greater than 0.1 percent in mass but less than 1 percent in mass.

[Example 4]

(Preparation of titanium oxide)

On the surface of rutile type titanium oxide (average particle diameter: 0.28μm; niobium content: 390ppm; vanadium content: 4ppm) obtained by the so-called chlorine method process carried out to oxidize titanium halide in gas-phase, an inert inorganic oxide layer was formed so as to contain, with respect to the entirety of titanium oxide after treatment, one percent in mass, 0.5 percent in mass, 0.5 percent in mass, respectively, of alumina, silica and zirconia, in addition, an organic compound layer was formed so as to contain with respect to the entirety of titanium oxide after treatment, 0.3 percent in mass of trimethylol ethane.

(Preparation of resin composition A for the A layer)

Pellets of ethylene-propylene random copolymer (refractive index: 1.50) and the above-mentioned titanium oxide were mixed in a proportion of 30:70 to obtain a mixture. This mixture was pelletized using a biaxial extruder to prepare a so-called master batch.
This master batch and the previous pellets of ethylene-propylene random copolymer were mixed at a mass proportion of 90:10 to prepare the resin composition A.

(Preparation of resin composition B for the B layer)

Pellets of ethylene-propylene random copolymer (refractive index: 1.50) and the above-mentioned titanium oxide were mixed in a proportion of 30:70 to obtain a mixture. This mixture was pelletized using a biaxial extruder to prepare a so-called master batch.
This master batch and the previous pellets of ethylene-propylene random copolymer were mixed at a mass proportion of 1:99 to prepare the resin composition B.

(Preparation of film)

The resin compositions A and B were respectively supplied to extruders A and B which were heated at 200°C, and from the extruders A and B, the resin compositions A and B in molten state were extruded respectively using a T-die into a sheet-shape so as to have the 2 layer constitution B layer/A layer, and cooled and solidified to form a film.

At a temperature of 135°C, the obtained film was biaxially drawn, 5 times along MD and 5 times along TD simultaneously, to obtain a reflective film having a thickness of 75μm (A layer: 70μm; B layer: 5μm). Measurements of gloss, reflectance and brightness were carried out on the obtained reflective film. The results are shown in Table 3.

Note that regarding the porosity in the A layer, the resin composition A was supplied to the extruder A to obtain a mono-layer film of A layer only (thickness: 70μm) according to the above manipulation, and the measurements were carried out on the mono-layer film. The results are shown in Table 3.

[Example 5]

A reflective film was obtained similarly to Example 4, except for the point that the resin composition B for the B layer was prepared as follows. The same evaluation as Example 4 was carried out on the obtained reflective film. The results are shown in Table 3.

(Preparation of resin composition B for the B layer)

Pellets of ethylene-propylene random copolymer (refractive index: 1.50) and silica (average particle diameter: 2μm) were mixed at a mass proportion of 99.7:0.3 to obtain a mixture, and this mixture was pelletized using a biaxial extruder.

[Example 6]

A reflective film was obtained similarly to Example 4, except that isobutyl triethoxy silane was used instead of trimethylol ethane in the preparation of titanium oxide of Example 4. The same evaluation as Example 4 was carried out on the obtained reflective film. The results are shown in Table 3.

[Comparative Example 3]

A reflective film was obtained similarly to Example 4, except for the point that the resin composition B for the B layer was prepared as follows. The same evaluation as Example 4 was carried out on the obtained reflective film. The results are shown in Table 3.

(Preparation of resin composition B for the B layer)

Pellets of ethylene-propylene random copolymer (refractive index: 1.50) and silica (average particle diameter: 2μm) were mixed at a mass proportion of 90:10 to obtain a mixture, and this mixture was pelletized using a biaxial extruder.

[Comparative Example 4]

A reflective film was obtained similarly to Example 4, except that, pellets of ethylene-propylene random copolymer (refractive index: 1.50) were used directly as the resin composition B for the B layer. The same evaluation as Example 4 was carried out on the obtained reflective film. The results are shown in Table 3.

[Table 3]

| | | Porosity (%) | Gloss | Reflectance (%) | Brightness (cd/cm$^2$) |
|---|---|---|---|---|---|
| Example | 4 | 8 | 76 | 98.7 | 6340 |
| | 5 | 9 | 79 | 98.5 | 6390 |
| | 6 | 9 | 73 | 98.2 | 6290 |
| Comparative Example | 3 | 9 | 46 | 96.5 | 6070 |
| | 4 | 7 | 82 | 97.6 | 6100 |

As is clear from Table 3, the reflective films of Examples 4 to 6, with a gloss of 50 or greater, and a reflectance of 97% or greater, were found to have excellent light reflectivity including brightness.

Meanwhile, the reflective film of Comparative Example 3, with a gloss of less than 50 and a reflectance of less than 97%, was found to be poorer than the reflective films of Examples 4 to 6 on the point of light reflectivity also including brightness.

In addition, the reflective film of Comparative Example 4, with a gloss of 70 or greater but a reflectance of less than 97%, was found to be poorer than the reflective films of Examples 4 to 6 on the point of light reflectivity also including brightness.

**Claims**

1. A reflective film,
   provided with an A layer containing a resin composition A comprising a lactic acid series polymer with a refractive index (n) of less than 1.52 or a polyolefin series resin with a refractive index (n) of less than 1.52, and a microparticulate filler, the content ratio of said microparticulate filler in said resin composition A being 10 to 80 percent in mass, and at the same time
   provided with a B layer as the outermost layer of the side of the face used for reflection, containing a resin composition B comprising a lactic acid series polymer with a refractive index (n) of less than 1.52 or a polyolefin series resin with a refractive index (n) of less than 1.52, and a microparticulate filler, the content ratio of said microparticulate filler in the resin composition B being greater than 0.1 percent in mass but less than 5 percent in mass;
   having a surface reflectance thereof with respect to light at 550nm wavelength of 97% or greater and a gloss at 60° of the side of the face used for reflection of 50 to 90.

2. The reflective film as recited in Claim 1, wherein the content ratio of said microparticulate filler in said resin composition A is 10 to 60 percent in mass.

3. The reflective film as recited in Claim 1, wherein said polyolefin series resin of said resin composition A is any of a polypropylene and ethylene-propylene copolymer, or a mixed resin thereof.

4. The reflective film as recited in any of Claims 1 to 3, wherein said microparticulate filler contained in said A layer is titanium oxide, the content ratio of said titanium oxide in said resin composition A being 10 to 60 percent in mass.

5. The reflective film as recited in any of Claims 1 to 4, wherein said microparticulate filler contained in said B layer is at least one species chosen from the group comprising titanium oxide, calcium carbonate, barium sulfate, zinc oxide and silica.

6. The reflective film as recited in any of Claims 1 to 5, wherein the thickness ratio of said A layer and said B layer at each layer is 20:1 to 1:1.

7. The reflective film as recited in any of Claims 4 to 6, wherein said titanium oxide contained in said A layer as microparticulate filler is titanium oxide with a niobium content of 500ppm or less.

8. The reflective film as recited in any of Claims 4 to 7, wherein said titanium oxide contained in said A layer as microparticulate filler is titanium oxide, the surface of which is coated with at least one species of inert inorganic oxide chosen from the group comprising silica, alumina and zirconia.

9. The reflective film as recited in any of Claims 4 to 7, wherein said titanium oxide contained in said A layer as microparticulate filler is titanium oxide, the surface of which is coated by combined application of silica and an inert inorganic oxide other than silica.

10. The reflective film as recited in any of Claims 4 to 9, wherein the particle diameter of titanium oxide as the microparticulate filler of the A layer is 0.1 $\mu$m to 1 $\mu$m and the particle diameter of the microparticulate filler of the B layer is 0.3 $\mu$m to 15 $\mu$m.

11. A reflective panel equipped with the reflective film as recited in any of Claims 1 to 10.

**EP 1 964 669 B1**

**Patentansprüche**

1. Reflektierender Film,
bereitgestellt mit einer Schicht A, enthaltend eine Harz-Zusammensetzung A, enthaltend ein Polymer der Milchsäurereserie mit einem Brechungsindex (n) von weniger als 1,52 oder ein Harz der Polyolefinserie mit einem Brechungsindex (n) von weniger als 1,52 und einen mikropartikulären Füllstoff, worin das Mengenverhältnis des mikropartikulären Füllstoffes in der Harz-Zusammensetzung A zwischen 10 und 80 Massenprozent beträgt, und gleichzeitig bereitgestellt mit einer Schicht B als äußerste Schicht der zur Reflektion verwendeten Frontseite, enthaltend eine Harz-Zusammensetzung B, umfassend ein Polymer der Milchsäureserie mit einem Brechungsindex (n) von weniger als 1,52 oder ein Harz der Polyolefinserie mit einem Brechungsindex (n) von weniger als 1,52 und einen mikropartikulären Füllstoff, worin das Mengenverhältnis des mikropartikulären Füllstoffes in der Harz-Zusammensetzung B größer als 0,1 Massenprozent, aber weniger als 5 Massenprozent beträgt;
mit einer Oberflächenreflektion, bezogen auf Licht bei einer Wellenlänge von 550 nm, von 97 % oder mehr und einem Glanz bei 60 ° der zur Reflektion verwendeten Frontseite von 50 bis 90.

2. Reflektierender Film gemäß Anspruch 1 , worin das Mengenverhältnis des mikropartikulären Füllstoffes in der Harz-Zusammensetzung A 10 bis 60 Massenprozent beträgt.

3. Reflektlerender Film gemäß Anspruch 1, worin das Harz der Polyolefinserie der Harz-Zusammensetzung A eines von Polypropylen und Ethylen-Propylen-Copolymer oder ein Mischharz davon ist.

4. Reflektierender Film gemäß einem der Ansprüche 1 bis 3, worin der mikropartikuläre Füllstoff, enthalten in der Schicht A, Titanoxid ist, und worin das Mengenverhältnis des Titanoxids in der Harz-Zusammensetzung A 10 bis 60 Massenprozent beträgt.

5. Reflektierender Film gemäß einem der Ansprüche 1 bis 4, worin der mikropartikuläre Füllstoff, enthalten in der Schicht B, mindestens einer ist, der ausgewählt ist aus der Gruppe, umfassend Titanoxid, Kalziumcarbonat, Bariumsulfat, Zinkoxid und Silizium.

6. Reflektierender Film gemäß einem der Anspruche bis 5, worin das Dickenverhältnis von der Schicht A und Schicht B in jeder Lage 20 : 1 bis 1 : 1 beträgt.

7. Reflektierender Film gemäß einem der Anspruche 4 bis 6, worin das Titanoxid, enthalten in der Schicht A als mikropartikulärer Füllstoff, Titanoxid mit einem Niobgehalt von 500 ppm oder weniger ist,

8. Reflektierender Film gemäß einem der Ansprüche 4 bis 7, worin das Titanoxid, enthalten in der Schicht A als mikropartikulärer Füllstoff, Titanoxid ist, dessen Oberfläche mit mindestens einer Art eines Inerten anorganischen Oxids, ausgewählt aus der Gruppe umfassend Siliziumoxid, Aluminiumoxyd und Zirkonoxid, beschichtet Ist,

9. Reflektierender Film gemäß einem der Anspruche 4 bis 7, worin das Titanoxid, enthalten in der Schicht A als mikropartikulärer Füllstoff, Titanoxid, ist, dessen Oberfläche beschichtet ist durch kombinierte Aufbringung von Siliziumoxid und einem inerten anorganischen Oxid, welches von Siliziumoxid verschieden ist.

10. Reflektierender Film gemäß einem der Ansprüche 4 bis 9, worin der Partikeldurchmesser des Titanoxids als mikropartikulärer Füllstoff der Schicht A 0,1 $\mu$m bis 1 $\mu$m und der Partikeldurchmesser des mikropartikulären Füllstoffs der Schicht B 0,3 $\mu$m bis 15 $\mu$m beträgt,

11. Reflektierende Platte, ausgestattet mit einem reflektierenden Film gemäß einem der Anspruche 1 bis 10.

**Revendications**

1. Film réfléchissant
qui une couche A contenant une composition une rétine A comprenant un d'une série de l'acide lactique un indice de réfraction (n) inférieur 1,52 ou une résine d'une série d'une polyoléfine présentant un indice de réfraction (n) inférieur à 1,52 et une charge microparticulaire, le rapport du contenu de ladite charge microparticulaire dans ladite composition de résine A étant 10 à 80 pourcent en masse et
qui en même temps une couche B comme couche extérieure du côté de la face utilisée pour la réflexion une composition d'une résine B comprenant un polymère une série de l'acide lactique présentant un indice de réfraction (n) inférieur à 1,52 ou une résine d'une série d'un polyoléfine présentant un indice de réfraction (n) inférieur à 1,52 et une charge microparticulaire, le rapport du contenu de ladite charge microparticulaire dans ladite composition de résine B étant supérieur à 0,1 pourcent en masse, mais inférieur à 5 pourcent en masse ;

présentant une réflectance de la surface par rapport à une lumière à 550 nm longueur d'ondes égale ou supérieure à 97 % et

une brillance à 60° du côté de la face utilisée pour la réflexion de 50 à 90.

**2.** Film réfléchissant selon la revendication 1, dans lequel le rapport du contenu de ladite charge microparticulaire dans ladite composition d'une résine A est 10 à 60 pourcent en masse.

**3.** Fils réfléchissant selon la revendication 1 , dans lequel ladite d'une d'une polyoléfine de la composition d'une résine A est n'importe lequel d'un polypropylène et une copolymére d'éthylène-propylène ou une résine mélangée de ceux-ci.

**4.** Film réfléchissant selon l'une des revendications 1 à 3, dans lequel ladite charge microparticulaire contenue dans ladite couche A est de dé titane, le rapport du contenu de ledit oxyde de titane dans ladite composition d'une résine A étant 10 à 60 pourcent en masse.

**5.** Film réfléchissant selon l'une des revendications 1 à 4, dans lequel ladite charge microparticulaire contenue dans ladite couche B est au moins une sélectionnée parmi le groupe comprenant l'oxyde de titane, le carbonate de calcium, le sulfate de baryum, l'oxyde de zinc et la silice,

**6.** Film réfléchissant selon des revendications 1 à 5, dans lequel le rapport de l'épaisseur de ladite couche A et ladite couche B de chaque couche est 20 : 1 à 1 : 1,

**7.** Film réfléchissant selon l'une des revendications 4 à 6, dans lequel ledit oxyde de titane contenu dans ladite couché A en tant que charge microparticulaire est de l'oxyde de titane présentant un contenu de niobium égal ou inférieur à 500 ppm.

**8.** Film réfléchissant selon l'une des revendications 4 à 7, dans lequel ledit oxyde de titane contenu dans ladite couche Au tant que charge microparticulaire est de l'oxyde de titane qui présente une surface qui est revêtue avec au moins un oxyde Inorganique inerte sélectionné parmi le groupe comprenant de la silice, de l'alumine et de la zircone.

**9.** Fils réfléchissant selon l'une des revendications 4 à 7, dans lequel ledit oxyde de titane contenu dans ladite couche A en tant que charge microparticulaire est de l'oxyde de titane qui présente une surface qui est revêtue par l'application combinée de la silice et un oxyde inorganique inerte autre que la silice.

**10.** Film réfléchissant selon l'une des revendications 4 à 9, dans lequel le diamètre des particules de l'oxyde de titane en tant que charge microparticulaire de la couche A est 0,1 $\mu$m à 1 $\mu$m et le des particules de la charge microparticulaire de la couche B est 0,3 $\mu$m à 15 $\mu$m.

**11.** Écran réfléchissant du film réfléchissant selon l'une des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002138150 A
- JP H10193494 A
- JP 2002122717 A
- JP 2004330727 A
- JP 3617535 B
- JP 3755905 B
- US 2004178139 A1
- US 6251505 B1
- JP 20005125700 A
- EP 1219412 A1